# EUROPÄISCHE PATENTSCHRIFT

(11) **EP 0 751 254 B1**
(45) Veröffentlichungstag und Bekanntmachung des Hinweises auf die Patenterteilung: **09.01.2002**
(21) Anmeldenummer: 96106886.3
(22) Anmeldetag: 02.05.1996
(51) Int. Cl.: D21D 1/30, D21D 1/00, D21B 1/32, B02C 7/11

(54) **Vorrichtung zur geregelten Dispergierbehandlung von hochkonsistentem Faserstoff**
Device for controlled dispersion treatment of high consistency pulp
Dispositif pour un traitement de dispersion contrôlé de pulpe à consistence élevée

(30) Priorität: 29.06.1995 DE 19523704
(43) Veröffentlichungstag der Anmeldung: 02.01.1997
(73) Patentinhaber: Voith Sulzer Stoffaufbereitung GmbH, 88191 Ravensburg (DE)
(72) Erfinder: Schneid, Josef, 88267 Vogt (DE); Schnell, Hans, 88512 Mengen (DE)

(56) Entgegenhaltungen:
- EP-A- 0 305 659
- WO-A-91/07228
- BE-A- 625 310
- DE-A- 1 761 864
- DE-A- 2 639 786
- DE-A- 3 047 013
- DE-U- 8 630 671
- FR-A- 2 224 591
- GB-A- 891 152
- US-A- 3 815 835
- US-A- 4 682 740
- PAPIER, DAS, Bd. 42, Nr. 10, Oktober 1988, DARMSTADT DE, Seiten 547-550, XP000000140 J. BRUCKNER: "Dispergierung"

## Beschreibung

Die Erfindung betrifft eine Vorrichtung zur geregelten Dispergierbehandlung von hochkonsistentem Faserstoff gemäß dem Oberbegriff des Anspruchs 1.

Eine derartige Behandlungsvorrichtung ist zum Beispiel aus der DE-PS 30 47 013 bekannt. Diese zum Dispergieren von Altpapier geeignete Vorrichtung dient dazu, den Stoff intensiv mechanisch und thermisch zu bearbeiten, wodurch die darin enthaltenen Störstoffe von den Fasern abgelöst, zerkleinert und/oder unter die Sichtbarkeitsgrenze gebracht werden können. Anders als zum Beispiel bei Papierstoff-Mahlrefinem wird bei derartigen Maschinen der Faserstoff nicht in einer pumpfähigen Suspension bearbeitet, sondern in Form eines teigigen oder weich-krümeligen Hochkonsistenzstoffes, vorzugsweise mit einem Trockengehalt zwischen 20 und 35 %. Auf diese Weise lassen sich beträchtlich höhere Scherkräfte in den Faserstoff übertragen, wodurch die genannten Ziele erreichbar sind, ohne daß dabei eine wesentliche Veränderung der Faserlänge erfolgt. In vielen Fällen wird die Wirkung der mechanischen Behandlung durch Hitze weiter verstärkt, z.B. durch Einstellen einer Faserstofftemperatur von 90° Celsius oder noch darüber. Auch als Kneter bezeichnete Maschinen, die im Gegensatz zum Disperger deutlich längere Verweilzeiten für den Faserstoff haben, können eine Dispergierbehandlung bewirken.

Die GB 891 152 A zeigt eine Dispergiervorrichtung, in der mit Hilfe von schwingenden Zähnen eine Ultraschallbehandlung von Gasen, Flüssigkeiten oder Feststoffen durchgeführt werden kann. Dabei werden im Bedarfsfall die Zahnzwischenräume verändert, um gleiche Strömungsquerschnitte auf dem radialen Weg des Stoffes durch die Garnitur zu erhalten.

Aus der DE-OS 26 39 786 ist eine Mahlmaschine bekannt, in der das Mahlgut, wie z.B. Hackschnitzel zu Fasern vermahlen wird. Dieser Vorgang ist daher nicht mit dem in einem Hochkonsistenzdisperger zu vergleichen, welcher bereits von einem Faserstoff ausgeht. Hackschnitzel sind hart und stückig und bilden keinen zusammenhängenden, weich-krümeligen Stoff. Daher hat diese Maschine auch keine axial ineinandergreifenden Zahnreihen.

Durch die hohe Konsistenz, die der Faserstoff bei der Behandlung hat, ist eine intensive mechanische Bearbeitung möglich, obwohl sich die Zähne der relativ zueinander bewegbaren Behandlungswerkzeuge nicht berühren, sondern sich vielmehr in einem Abstand von ca. 1 mm oder mehr aneinander vorbeibewegen. Oft kann der Abstand zwischen den Behandlungswerkzeugen zur Regelung der Behandlungsintensität verändert werden. Es ist außerdem bekannt, daß die Konsistenz des Faserstoffs einen wesentlichen Einfluß auf die Behandlungsintensität hat, weshalb auch diese gelegentlich verändert wird. Eine solche Veränderung erfolgt zum Beispiel durch eine geregelte Wasserzugabe vor Eintritt des Faserstoffs in den Behandlungsraum. Das funktioniert zwar gut, hat aber den Nachteil, daß die ohnehin relativ aufwendige Eindickung zu einem höheren Trockengehalt führen muß als zur Behandlung eigentlich erforderlich, damit ein ausreichendes Regelpotential für die genannte Leistungsregelung zur Verfügung steht. Der Regelaufwand dafür ist außerdem beträchtlich.

Der Erfindung liegt daher die Aufgabe zugrunde, eine Behandlungsvorrichtung der genannten Art zu schaffen, mit der es möglich ist, die Behandlungsintensität mit einfachen Mitteln zu steuern oder den Regelbereich für die Behandlungsintensität zu vergrößern.

Diese Aufgabe wird durch die im Kennzeichen des Anspruchs 1 genannten Merkmale vollständig gelöst.

Dabei wird die Tatsache genutzt, daß durch Veränderungen der Austrittsquerschnitte an den Behandlungswerkzeugen oder am sich anschließeneden Ringraum der Füllungsgrad und/oder der Kompressionsdruck in den Behandlungswerkzeugen der Vorrichtung verändert und gesteuert werden kann.

Wie bereits ausgeführt wurde, wird die Behandlungsintensität bisher in vielen Fällen dadurch gesteuert, daß der Abstand, in dem sich die Behandlungswerkzeuge zueinander befinden, einstellbar ist. Dabei führt bekanntlich die Verkleinerung des Abstandes zu einer Erhöhung der Bearbeitungswirkung und umgekehrt. Konstruktiv wird das meistens so gelöst, daß die Zähne der Behandlungswerkzeuge so angeschrägt sind, daß bei einer Verschiebung der Zähne senkrecht zu ihrer Umfangsbewegung eben eine solche Veränderung des Abstandes zwischen den Zähnen unterschiedlicher Behandlungswerkzeuge erfolgt. Infolge der Abschrägung haben die Zähne keinen konstanten Materialquerschnitt mehr, wodurch z.B. die axiale Erstreckung von radial durchströmten Behandlungswerkzeugen begrenzt wird. In solchen Fällen kann daher die Anwendung der Erfindung die erfindungsgemäß ausgestaltete Vorrichtung nicht nur vereinfachen, sondern auch eine Möglichkeit schaffen, Behandlungswerkzeuge mit längeren Zähnen, axial betrachtet, zu bauen.

Die Erfindung und ihre Vorteile werden erläutert anhand von Zeichnungen. Dabei zeigen:
- Fig. 1: Schnitt durch den wesentlichen Teil der erfindungsgemäßen Vorrichtung in Seitenansicht;
- Fig. 2: Aufsicht auf die Vorrichtung;
- Fig. 3: Details zur Erläuterung der Wirkung;
- Fig. 4: schematisch: Eine andere Ausführungsform;
- Fig. 5: eine Variante der Erfindung, geschnitten in Seitenansicht;
- Fig. 6: die Variante gemäß der Fig. 5 in Aufsicht;
- Fig. 7, 8: zwei weitere Varianten, geschnitten in Seitenansicht;
- Fig. 9: eine weitere Variante, geschnitten in Aufsicht.

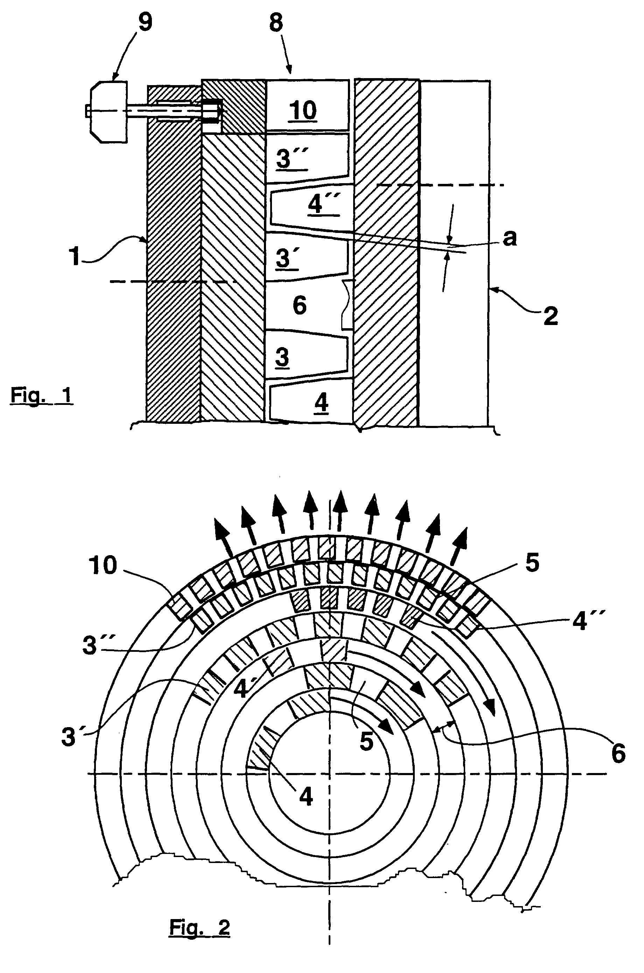

Fig. 1 zeigt zwei relativ zueinander bewegbare komplementäre Behandlungswerkzeuge 1 und 2, die miteinander so im Eingriff stehen, daß sie zusammenwirken können. Die gewählte Darstellung in Form eines Schnitts in Seitenansicht läßt erkennen, daß sich radial von innen nach außen die zu verschiedenen Behandlungswerkzeugen gehörenden Zähne 3, 4, 3', 4", 3" abwechseln. Zur besseren Darstellung ist einer der Zähne des Behandlungswerkzeuges 2 nicht gezeichnet, so daß der Leerraum 6 leicht erkennbar ist. Die Anordnung ist derart, daß die Zahnreihe eines Behandlungswerkzeuges jeweils in den Leerraum des komplementären Werkzeuges reicht. Dabei verbleibt zwischen relativ zueinander bewegbaren Zähnen ein Abstand a.

In der Aufsicht gemäß Fig. 2 dieses Gegenstandes erkennt man, daß die Leerräume ringförmig sind. Auch die Zähne 3, 3', 3", 4, 4', 4" sind in ringförmigen Reihen angeordnet. Derartige Behandlungswerkzeuge sind grundsätzlich bereits bekannt und werden beispielsweise zum Entstippen oder Dispergieren eingesetzt. Die entscheidende Neuerung findet sich im Bereich der Austragsvorrichtung 8. Diese weist in dem hier gezeigten Beispiel eine ringförmige Zahnreihe auf mit einer Vielzahl von Zähnen 10. Zweckmäßig ist, daß diese, stromabwärts gesehen, letzte Zahnreihe zum selben Behandlungswerkzeug 1 gehört wie die stromaufwärts benachbarte Zahnreihe mit den Zähnen 3". Es findet also hier kein Wechsel statt wie bei den anderen im Eingriff stehenden Zahnreihen. Da die hier betrachteten letzten Zahnreihen sich relativ zueinander verdrehen lassen, können - wie in Fig. 2 erkennbar - die Zahnlücken 5 der vorletzten Zahnreihe wahlweise mehr oder weniger durch Zähne 10 verdeckt werden. Dadurch ergibt sich eine Drosselwirkung, die mit einfachen Mitteln regulierbar ist. Hierzu ist eine Einstellvorrichtung 9 (Fig.1) schematisch dargestellt. Der Durchgang des Faserstoffs durch die Bearbeitungsvorrichtung ist in Fig. 2 mit einer Anzahl von Pfeilen radial außerhalb angedeutet. Aus Gründen der vereinfachten und übersichtlichen Darstellung ist ein großer Teil der vorhandenen Zähne nicht gezeichnet. In der Regel sind diese über den ganzen Umfang gleichmäßig verteilt.

Bekanntlich ist eine Vielzahl von verschiedenen derartigen Zahngarnituren im Einsatz, deren Ausgestaltung sich nach den Bedingungen der Herstellbarkeit und der gewünschten Bearbeitungswirkung richtet.

In Fig. 3 ist die bereits beschriebene Wirkung der Austragsvorrichtung 8 in einer etwas anderen Weise dargestellt. Die Zähne 10 gehören zur stromabwärts letzten und die Zähne 3" zur stromabwärts vorletzten Zahnreihe des Stators. Wenn die Zähne 3" ortsfest gehalten und die Zähne 10 relativ dazu verdrehbar eingesetzt sind (Doppelpfeil 12), ergeben sich für den Stoffstrom, angedeutet durch die Pfeile 15, veränderte Querschnitte 7 am Übergang von der zwischen den Zähnen 3"gebildeten Zahnlücke 5 zur Zahnlücke zwischen den Zähnen 10. Dadurch findet die gewünschte Regulierung statt. Stromaufwärts zu den Zähnen 3" bewegen sich die zum anderen Behandlungswerkzeug, dem Rotor, gehörenden Zähne 4" mit relativ hoher Geschwindigkeit (Pfeil 13).

Hierdurch wird in bekannter Weise die hohe Scherbeanspruchung zwischen dem durch die Zahnlücken geförderten Stoff und den Zähnen 3" , 4" möglich.

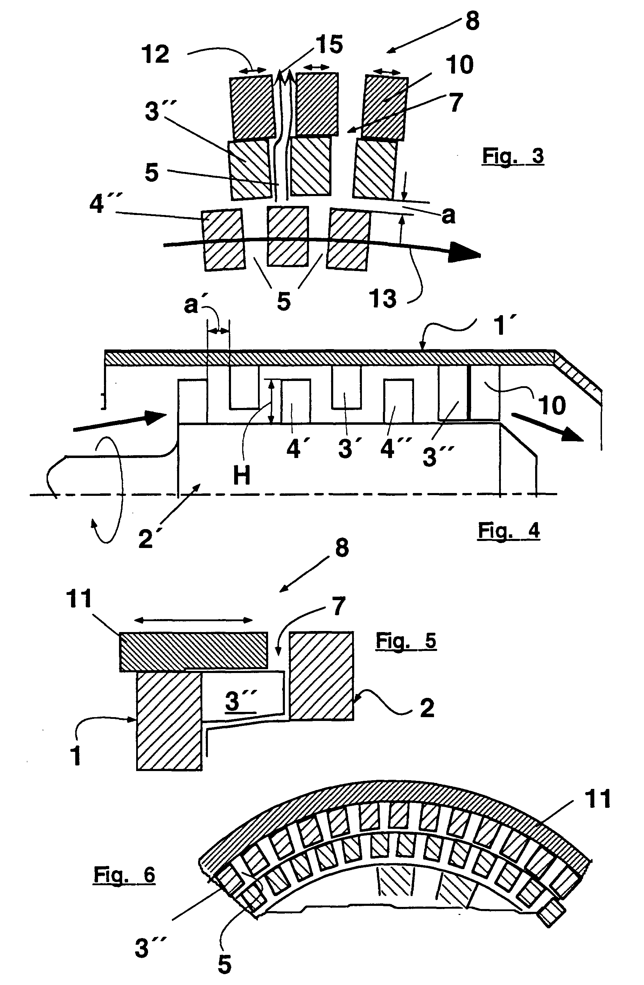

Fig. 4 erläutert, daß nicht nur bei einer radialen Strömungsführung des Faserstoffes sondern auch bei seiner axialen Strömungsführung die erfindungsgemäße Vorrichtung verwendbar ist. Man erkennt die beiden Behandlungswerkzeuge 1' und 2', wobei 2' zu einem Rotor und 1' zu einem Stator gehören, mit Zähnen von der Höhe H. Relativ zueinander bewegbare Zähne haben den Abstand a'.

Eine weitere Möglichkeit, um die Regulierung an der Austragsvorrichtung 8 vornehmen zu können, zeigen die Fig. 5 und 6. In diesem Falle enthält die Austragsvorrichtung einen Ring, der sich senkrecht zur Strömungsrichtung des Faserstoffs und relativ zur vorletzten Zahnreihe verschieben läßt. Auch dadurch werden am Austritt unterschiedlich große Strömungsquerschnitte frei gegeben und eine Regulierung möglich. Während Fig. 5 wiederum eine seitliche Schnittzeichnung ist, wird die Vorrichtung in Fig. 6 als Aufsicht dargestellt.

Es ist ohne weiteres denkbar, noch andere Möglichkeiten zur Querschnittseinstellung an der Austragsvorrichtng vorzusehen. Beispielsweise können, wie in Fig. 9 gezeigt, die Zähne in der, in Strömungsrichtung gesehen, letzten Zahnreihe jeweils zweiteilig ausgeführt sein, wobei dann durch Verschieben dieser beiden Teile zueinander der freie Querschnitt 5 der Zahnlücken zwischen diesen Zähnen verändert wird.

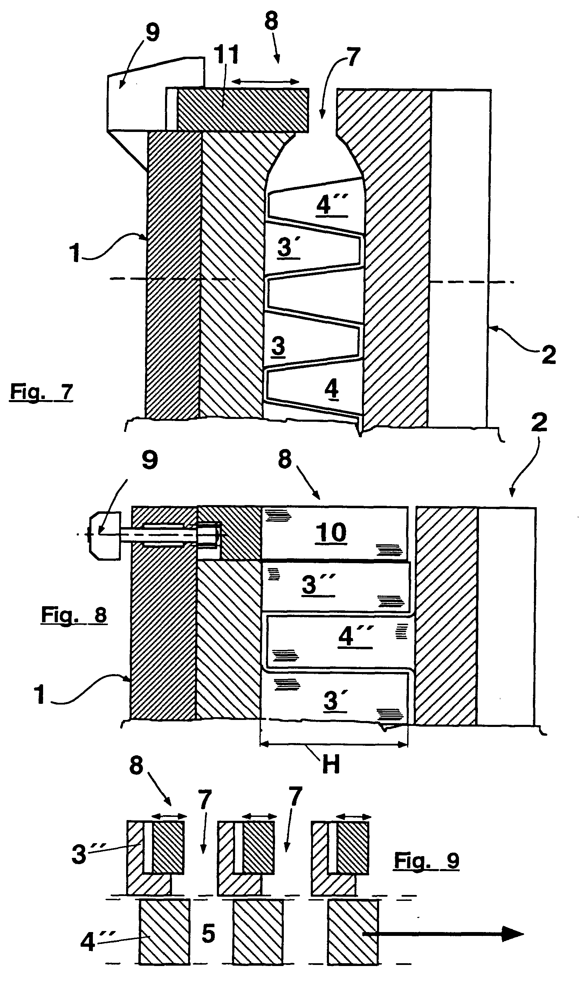

In der Regel ist es konstruktiv einfacher, die erfindungsgemäß verstellbare Austragsvorrichtung an dem stillstehenden Behandlungswerkzeug 1, 1', also im Stator, anzubringen. Eine solche Lösung ist dann besonders einfach zu gestalten, wenn, was auch wiederum sehr häufig ist, die in Stoffströmungsrichtung letzte Zahnreihe ebenfalls zum Stator gehört. Daß auch andere Lösungen denkbar sind, zeigt Fig. 7. Hier enthält der Rotor die, in Strömungsrichtung gesehen, letzte Zahnreihe (Zähne 4"). Der Sinn dieser Ausführungsvariante ist der, daß in bestimmten Fällen das Ausschleudern des behandelten Stoffes mit Hilfe der letzten Zahnreihe gewünscht wird. Auch eine derart gestaltete Behandlungsvorrichtung kann gemäß der vorliegenden Erfindung ausgeführt werden. Beispielsweise ist hier das stillstehende Behandlungswerkzeug 1 mit einem rechtwinklig zur Strömungsrichtung verschiebbaren Ring 11 versehen.

Wie bereits gesagt, kann es bei der erfindungsgemäßen Vorrichtung überflüssig werden, daß zum Zwecke der Leistungsregelung zwei miteinander in Eingriff stehende Behandlungswerkzeuge (z.B. Rotor und Stator) gegeneinander verstellt werden müssen. In solchen Fällen können die Zähne einen im wesentlichen konstanten Querschnitt haben, was besondere Vorteile bringt, wenn eine möglichst große Zahnhöhe H gewünscht wird. Siehe hierzu Fig. 8.

## Patentansprüche

1. Vorrichtung zur geregelten Dispergierbehandlung von hochkonsistentem Faserstoff, mit mindestens zwei relativ zueinander bewegbaren Behandlungswerkzeugen (1,1', 2,2'),
1.1 die jeweils einen im wesentlichen rotationssymmetrischen Grundkörper aufweisen und koaxial zueinander angeordnet sind,
1.2 die in ringförmigen, zu ihrer Mitte konzentrischen Reihen angeordnete Zähne (3, 3', 3", 4, 4', 4") aufweisen, zwischen welchen sich Zahnlücken (5) befinden, die freie Querschnitte bilden, welche von dem zu behandelnden Faserstoff durchströmbar sind,
1.3 von denen wenigstens eines eine Austragsvorrichtung (8) für den austretenden Faserstoff mit vom Faserstoff durchströmbaren freien Querschnitten (7) enthält,
1.4 die zwischen den Zahnreihen ringförmige Leerräume (6) aufweisen,
1.5 die so zueinander positioniert sind, daß mindestens eine Zahnreihe eines Behandlungswerkzeuges (1,2) in einen ringförmigen Leerraum (6) eines anderen Behandlungswerkzeuges (2,1) hineinreicht, wodurch die Zahnreihen ineinander greifen,
1.5.1 wobei der kleinste Abstand (a, a') zwischen den zu benachbarten Zahnreihen gehörenden relativ zueinander bewegbaren Zähnen (3, 3', 3", 4, 4', 4") mindestens 1 mm beträgt,
**dadurch gekennzeichnet,**
**daß** die vom Faserstoff durchströmbaren freien Querschnitte (7) der Austragsvorrichtung (8) mit Hilfe einer Einstellvorrichtung (9) veränderbar sind.

2. Vorrichtung nach Anspruch 1,
**dadurch gekennzeichnet,**
**daß** die Einstellvorrichtung (9) rotationssymmetrisch ist und koaxial zum Grundkörper ist.

3. Vorrichtung nach Anspruch 1 oder 2,
**dadurch gekennzeichnet,**
**daß** ein Behandlungswerkzeug (1, 1') ein feststehender Stator ist und das damit zusammenwirkende Behandlungswerkzeug (2, 2') ein antreibbarer Rotor.

4. Vorrichtung nach Anspruch 3,
**dadurch gekennzeichnet,**
**daß** die Austragsvorrichtung (8) zum Stator gehört.

5. Vorrichtung nach Anspruch 1, 2 , 3 oder 4,
**dadurch gekennzeichnet,**
**daß** die Austragsvorrichtung (8) durch die, in Strömungsrichtung gesehen, letzte und vorletzte Zahnreihe gebildet wird, wobei diese Zahnreihen zu demselben Behandlungswerkzeug (1, 1', 2, 2') gehören und in Umfangsrichtung relativ zueinander derart verdrehbar sind, daß ein Teil des jeweils durch eine Zahnlücke (5) in der vorletzten Zahnreihe gebildeten freien Querschnittes durch variierbares Abdecken mit mindestens einem der letzten Zahnreihe zugehörigen Zahn (10) veränderbar ist.

6. Vorrichtung nach Anspruch 5,
**dadurch gekennzeichnet,**
**daß** die, in Strömungsrichtung gesehen, letzte und vorletzte Zahnreihe die gleiche Teilung haben.

7. Vorrichtung nach Anspruch 1, 2, 3 oder 4,
**dadurch gekennzeichnet,**
**daß** die Austragsvorrichtung (8) durch die, in Strömungsrichtung gesehen, letzte Zahnreihe und einem sich stromab anschließenden Ring (11) gebildet wird, wobei die Zahnreihe und der Ring (11) relativ zueinander rechtwinklig zur Strömungsrichtung derart verschiebbar sind, daß ein Teil des jeweils durch die Zahnlücken (5) in der letzten Zahnreihe gebildeten freien Querschnittes durch variierbares Abdecken mit mindestens einem Teil des Ringes (11) veränderbar ist.

8. Vorrichtung nach einem der vorstehenden Ansprüche,
**dadurch gekennzeichnet,**
**daß** der rotationssymmetrische Grundkörper mehrere radial zueinander angeordnete konzentrische Zahnreihen enthält und zwei benachbarte, relativ zueinander bewegbare Behandlungswerkzeuge axial nebeneinander angeordnet sind.

9. Vorrichtung nach Anspruch 8,
**dadurch gekennzeichnet,**
**daß** die Zahnreihen auf einer ebenen Scheibe mit zur Zahnreihe geschlossenen Oberfläche angeordnet sind.

10. Vorrichtung nach Anspruch 8 oder 9,
**dadurch gekennzeichnet,**
**daß** die, in Strömungsrichtung gesehen, letzte und vorletzte Zahnreihe zu zwei gegeneinander verdrehbaren konzentrischen Ringen gehören, wobei die radialen Außenflächen der Zähne in der vorletzten Zahnreihe zumindest auf einem Teil des Umfangs die radialen Innenflächen der Zähne in der letzten Zahnreihe berühren.

11. Vorrichtung nach Anspruch 8 oder 9,
**dadurch gekennzeichnet,**
**daß** die, in Strömungsrichtung gesehen, letzte Zahnreihe und der Ring zu zwei gegeneinander axial verschiebbaren konzentrischen Ringen gehören, wobei die radialen Außenflächen der Zähne in der letzten Zahnreihe zumindest teilweise die radialen Innenflächen des Ringes berühren.

12. Vorrichtung nach einem der Ansprüche 1 bis 7,
**dadurch gekennzeichnet,**
**daß** der rotationssymmetrische Grundkörper mehrere axial nebeneinander angeordnete konzentrische Ringe aufweist, die jeweils wenigstens eine Zahnreihe enthalten.

13. Vorrichtung nach Anspruch 12,
**dadurch gekennzeichnet,**
**daß** die Zahnreihen benachbarter Ringe eines Grundkörpers axial zueinander versetzt angeordnet sind.

## Claims

1. Device for controlled dispersion treatment of highly compact fibrous material, having at least two treatment tools (1, 1', 2, 2') which are movable relative to each other,
1.1 which have respectively one substantially rotationally-symmetrical basic body and are disposed coaxially relative to each other,
1.2 which have teeth (3, 3', 3", 4, 4', 4") which are disposed in annular rows which are concentric to their centre, between which teeth tooth spaces (5) are situated which form free cross-sections through which the fibrous material to be treated can flow,
1.3 at least one of which contains a discharge device (8) for the emergent fibrous material with free cross-sections (7) through which the fibrous material can flow,
1.4 which have annular empty spaces (6) between the rows of teeth,
1.5 which are positioned relative to each other in such a manner that at least one row of teeth of one treatment tool (1, 2) extends into an annular empty space (6) of another treatment tool (2, 1), as a result of which the rows of teeth engage in each other,
1.5.1 the smallest spacing (a, a') between the teeth (3, 3', 3", 4, 4', 4"), which belong to the adjacent rows of teeth and are movable relative to each other, being at least 1 mm,
**characterised in that,**
the free cross-sections (7) of the discharge device (8), through which cross-sections the fibrous material can flow, can be changed by means of an adjustment device (9).

2. Device according to claim 1,
**characterised in that**
the adjustment device (9) is rotationally-symmetrical and is coaxial to the basic body.

3. Device according to claim 1 or 2,
**characterised in that**
one treatment tool (1, 1') is a stationary stator and the treatment tool (2, 2') which cooperates therewith is an actuatable rotor.

4. Device according to claim 3,
**characterised in that**
the discharge device (8) belongs to the stator.

5. Device according to claim 1, 2, 3 or 4,
**characterised in that**
the discharge device (8) is formed by the last and second last row of teeth, as observed in the direction of flow, these rows of teeth belonging to the same treatment tool (1, 1', 2, 2') and being rotatable in the circumferential direction relative to each other in such a manner that one part of the free cross-section, which is formed respectively by a tooth space (5) in the second last row of teeth, is changeable by variable covering with at least one tooth (10) which belongs to the last row of teeth.

6. Device according to claim 5,
**characterised in that**
the last and second last row of teeth, as observed in the direction of flow, have the same pitch.

7. Device according to claim 1, 2, 3 or 4,
**characterised in that**
the discharge device (8) is formed by the last row of teeth, as observed in the direction of flow, and by a ring (11) which is adjacent in a downstream direction, the row of teeth and the ring (11) being displaceable relative to each other at right angles to the direction of flow in such a manner that a part of the free cross-section, which is formed respectively by the tooth spaces (5) in the last row of teeth, is changeable by variable covering with at least one part of the ring (11).

8. Device according to one of the preceding claims,
**characterised in that**
the rotationally-symmetrical basic body contains a plurality of concentric rows of teeth, which are disposed radially to each other, and two adjacent treatment tools, which are movable relative to each other, are disposed axially next to each other.

9. Device according to claim 8,
**characterised in that**
the rows of teeth are disposed on a flat disc with a surface which is closed towards the row of teeth.

10. Device according to claim 8 or 9,
**characterised in that,**
the last and second last row of teeth, as observed in the direction of flow, belong to two concentric rings which can be twisted relative to each other, the radial exterior faces of the teeth in the second last row of teeth touching, at least on one part of the circumference, the radial interior faces of the teeth in the last row of teeth.

11. Device according to claim 8 or 9,
**characterised in that,**
the last row of teeth, as observed in the direction of flow, and the ring belong to two concentric rings which are axially displaceable relative to each other, the radial exterior faces of the teeth in the last row of teeth touching at least in part the radial interior faces of the ring.

12. Device according to one of the claims 1 to 7,
**characterised in that**
the rotationally-symmetrical basic body has a plurality of concentric rings which are disposed axially next to each other and contain respectively at least one row of teeth.

13. Device according to claim 12,
**characterised in that**
the rows of teeth of adjacent rings of a basic body are disposed in an axially offset manner to each other.

## Revendications

1. Dispositif pour le traitement par dispersion régulée d'une matière fibreuse très consistante, comportant au moins deux outils de traitement (1, 1', 2, 2') déplaçables l'un par rapport à l'autre,
1.1 qui comportent chacun un corps de base sensiblement à symétrie de révolution et qui sont disposé coaxialement l'un par rapport à l'autre,
1.2 qui comportent des dents (3, 3', 3", 4, 4', 4") disposées en rangées annulaires, concentriques à leur centre, entre lesquelles se trouvent des entredents (5) qui forment des sections transversales libres, lesquelles peuvent être traversées par la matière fibreuse à traiter,
1.3 dont un au moins contient un dispositif d'extraction (8) pour la matière fibreuse sortante, avec des sections transversales (7) libres qui peuvent être traversées par la matière fibreuse,
1.4 qui présentent des espaces libres annulaires (6) entre les rangées de dents,
1.5 qui sont positionnés les uns par rapport aux autres, de manière qu'au moins une rangée de dents d'un outil de traitement (1, 2) pénètre dans un espace vide annulaire (6) d'un autre outil de traitement (2, 1), ce qui fait que les rangées de dents s'engagent les unes dans les autres,
1.5.1 la plus petite distance (a, a') entre les dents (3, 3', 3", 4, 4', 4") déplaçables les unes par rapport aux autres et faisant partie de rangées de dents voisines, est au moins de 1 millimètre,
**caractérisé en ce que** les sections transversales libres (7) du dispositif d'extraction (8), qui peuvent être traversées par la matière fibreuse, sont variables au moyen d'un dispositif de réglage (9).

2. Dispositif selon la revendication 1, **caractérisé en ce que** le dispositif de réglage (9) présente une symétrie de révolution et est coaxial au corps de base.

3. Dispositif selon la revendication 1 ou 2, **caractérisé en ce qu'**un outil de traitement (1, 1') est un stator fixe et l'outil de traitement (2, 2') qui coopère avec le premier est un rotor qui peut être entraîné.

4. Dispositif selon la revendication 3, **caractérisé en ce que** le dispositif d'extraction (8) fait partie du stator.

5. Dispositif selon la revendication 1, 2, 3 ou 4, **caractérisé en ce que** le dispositif d'extraction (8) est formé par la dernière et l'avant-dernière rangée de dents, vu dans le sens d'écoulement, ces rangées de dents faisant partie du même outil de traitement (1, 1', 2, 2') et pouvant tourner l'une par rapport à l'autre dans le sens périphérique, de manière qu'une partie de la section transversale libre, formée par un entredent (5) dans l'avant-demière rangée de dents, puisse varier par recouvrement variable avec au moins une dent (10) qui fait partie de la dernière rangée de dents.

6. Dispositif selon la revendication 5, **caractérisé en ce que** la dernière et l'avant-dernière rangées de dents, vues dans le sens d'écoulement, présentent le même pas.

7. Dispositif selon la revendication 1, 2, 3 ou 4, **caractérisé en ce que** le dispositif d'extraction (8) est formé par la dernière rangée de dents, vue dans le sens d'écoulement, et par un anneau (11) s'y rattachant en aval, la rangée de dents et l'anneau (11) pouvant être déplacés l'un par rapport à l'autre, à angle droit, par rapport au sens d'écoulement, de manière qu'une partie de la section transversale libre, formée par les entredents (5) dans la dernière rangée de dents, puisse être variée par recouvrement variable avec au moins une partie de l'anneau (11).

8. Dispositif selon l'une des revendications précédentes, **caractérisé en ce que** le corps de base à symétrie de révolution contient plusieurs rangées de dents concentriques, disposées radialement les unes par rapport aux autres, et deux outils de traitement voisins, déplaçables l'un par rapport à l'autre, disposés côte à côte axialement.

9. Dispositif selon la revendication 8, **caractérisé en ce que** les rangées de dents sont disposées sur un disque plan avec surface fermée vers la rangée de dents.

10. Dispositif selon la revendication 8 ou 9, **caractérisé en ce que** la dernière et l'avant-dernière rangées de dents, vues dans le sens d'écoulement, font partie de deux anneaux concentriques, pouvant tourner l'un par rapport à l'autre, les surfaces extérieures radiales des dents de l'avant-dernière rangée de dents étant en contact, au moins sur une partie du périmètre, avec les surfaces intérieures radiales des dents de la dernière rangée de dents.

11. Dispositif selon la revendication 8 ou 9, **caractérisé en ce que** la dernière rangée de dents, vue dans le sens d'écoulement, et l'anneau font partie de deux anneaux concentriques déplaçables axialement l'un par rapport à l'autre, les surfaces extérieures radiales des dents de la dernière rangée de dents étant en contact, au moins en partie, avec les surfaces intérieures radiales de l'anneau.

12. Dispositif selon l'une des revendications 1 à 7, **caractérisé en ce que** le corps de base à symétrie de révolution comporte plusieurs anneaux concentriques, disposés axialement côte à côte, qui contiennent chacun au moins une rangée de dents.

13. Dispositif selon la revendication 12, **caractérisé en ce que** les rangées de dents d'anneaux voisins d'un corps de base sont disposées axialement décalées l'une par rapport à l'autre.
